# EUROPEAN PATENT APPLICATION

(11) **EP 1 321 226 A2**
(43) Date of publication of application: **25.06.2003**
(21) Application number: 02028322.2
(22) Date of filing: 17.12.2002
(51) Int. Cl.: B23Q 17/22, B23Q 17/24, G05B 19/19

(54) **Diamond machine equipped with a device for the positioning of items of jewelry or the like to be processed**

(30) Priority: 21.12.2001 IT VR20010139
(71) Applicant: Faimond S.r.l., 36057 Arcugnano, Vicenza (IT)
(72) Inventor: Gianluigi, Dal Lago, 36057 Arcugnano, (Vicenza) (IT)
(74) Representative: Savi, Alberto

(57) **Abstract**

The peculiarity of the present diamond machine is represented by a positioning device which is able to detect the surface position and the height of a working point to process items of jewelry, chainlets or the like so as to permit diamond tools to carry out incisions according to the wished manner and depth.

In general, the diamond machine (1) according to the present invention is utilized to process objects showing different shapes and comprises a detecting laser ray unit (2). However, the unit (2) may be also an ultrasound unit or an infrared unit or a unit operating with another kind of emission depending on the need.

Preferably but not necessarily, the detecting unit (2) is realized as a one-body unit. The unit (2) is mounted on a suitable support which is separate from an incising head (3). However, the detecting unit (2) may be placed in the inside of the incising head (3) itself in which it may be coaxial to the diamond tools. In addition, the detecting unit (2) may be displaced on an adjustable head.

## Description

The present invention proposes a diamond machine. The peculiarity of this diamond machine is represented by a positioning device which is able to detect the surface position and the height of a working point to process items of jewelry, chainlets or the like so as to permit diamond tools to carry out incisions according to the wished manner and depth.

Unlike the known solutions, the present diamond machine is provided with means which utilize an only instrument and permit to detect objects through measuring devices which emit laser rays or ultrasounds or infrared rays or the like which detect the object profile and its distance from the diamond tool with precision.

The prior art of the field relating to diamond machines that effect a diamond incising of items of jewelry discloses devices that incise the pieces to be worked in different ways depending on the shape of the piece and on the kind of result to be obtained.

For instance, diamond machines for incising spherical objects are known. These machines comprise a unit for the support of the piece to be worked and an incising unit that includes one or more diamond tools. The diamond tools are brought over the piece to be worked while the piece is rotated. These machines carry out their function correctly if the surface of the piece to be worked is regular, for instance in case of a perfectly spherical surface or in case of solid pieces or pieces with a remarkable thickness. However, if the piece is hollow or its thickness is scarce, it is not possible to ascertain the exact distance between the tool and set-up incising depth and the piece to be worked. In this case, the tool could provoke a breaking of the sector being processed.

The risk of breakages increases if the thickness of the object to be worked is very thin or the surface of the object is very irregular, for instance in case of elliptic, ovoidal objects or any objects showing an irregular shape, that is not spherical, nor flat. In these cases, the tool works the shape of the object with a great difficulty and a manual incision may be required.

In addition, the prior art of this field discloses detecting devices that are provided with reading devices. These reading devices may be emitters and receivers of laser rays or the like which permit that the rays maintain a constant grazing position on the surface of the rotating object.

However, in the above cases it is necessary to utilize two instruments, i.e. one emission instrument and one reception instrument. Above all, there is the problem that this kind of devices is suitable only for solid objects and therefore, the applied art for these devices is very limited.

The present invention relates to this field and proposes to remove the above inconveniences by utilizing only one detecting one-body instrument which comprises both ray emission means and ray reception means for the detection of the surface position and height of the working point of the piece to be worked as well as for the transmission of the detected data to means which control the displacement of the incising tool so that the incising tool can follow the shape of the piece to be worked perfectly and can be displaced along the piece surface so as to execute automatic, continuous, progressive, alternate movements.

The general aim of the present invention is that the diamond machine can execute a diamond incision on any piece, even if the shape of the piece is very irregular or the piece is hollow.

The above specific aims, advantages and functions are reached according to the present invention with a diamond machine, characterized by the fact that reading means are utilized and comprise at least a measuring laser instrument or a measuring ultrasound instrument or a measuring microwave instrument or the like, which instrument is realized as a one-body instrument and detects the surface position and the height of the working point of the piece to be worked in a condition of direct pointing and the information detected by the reading instrument is converted in corresponding displacements of the diamond tool on the object to be worked; the device is controlled by a data processing device or other similar device such as a detecting processor which detects the surface position and the height of the working point.

Further features and details of the present invention will be understood better from the following specification, which does not limit the invention itself, on the base of the accompanying drawing wherein:
- Fig. 1 and Fig. 1a are schematic front views of a diamond machine provided with detecting means according to the present invention;
- Fig. 2 is a schematic view of the diamond machine provided with detecting means according to a possible variant of utilization;
- Fig. 3 is a schematic front view of the diamond machine provided with the detecting means, installed on a flat vice; and
- Fig. 4 is a schematic lateral view of a kind of working on a piece that is arranged on a disc support.

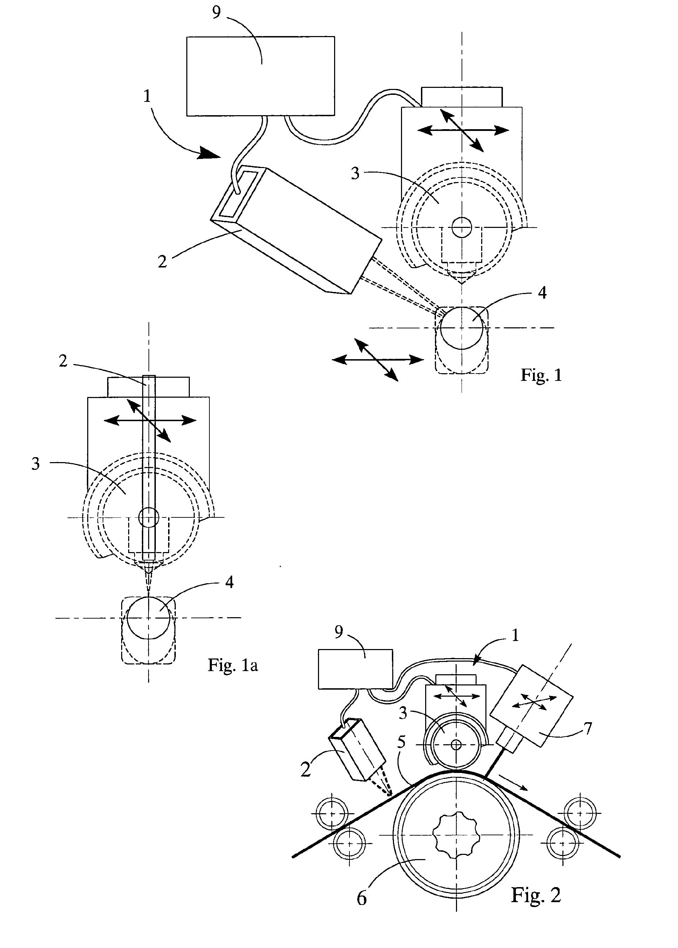

With reference to the accompanying drawings, number 1 denotes a diamond machine as a whole according to the present invention. This machine can incise pieces showing different shapes and its main peculiarity is the presence of a detecting unit 2 which may be a detecting laser unit or a detecting ultrasound unit or a detecting infrared ray unit. However, the detecting unit 2 is carried out preferably but not necessarily as a one-body unit and is mounted on a suitable support which is separated from an incising head 3. However, as it can be seen in Fig. 1a, the detecting unit 2 can be placed in the inside of the incising head 3 in which it can be arranged coaxially to the tools.

In addition, the detecting unit 2 can be displaced by utilizing an adjustable head.

The laser ray or the like of the detecting unit 2 can be emitted to directly point at the surface of a piece 4 to be worked. The piece 4 is bound to a suitable fixed or movable support, for instance a counter-point support or a vice support or the like.

The detection may be done also in case the object or piece 5 is continuously fed along a vice 6 so that the piece may be worked by a conventional diamond head and a laser instrument 7 arranged in a suitable housing.

The detection through the detecting unit 2 may be done also on other types of support, for instance a flat vice 8 or other suitable supports,

All the data of the surface position and height of the working point are sent to a processor 9 and working head 3. More precisely, the data are sent to the horizontal and vertical diamond tools.

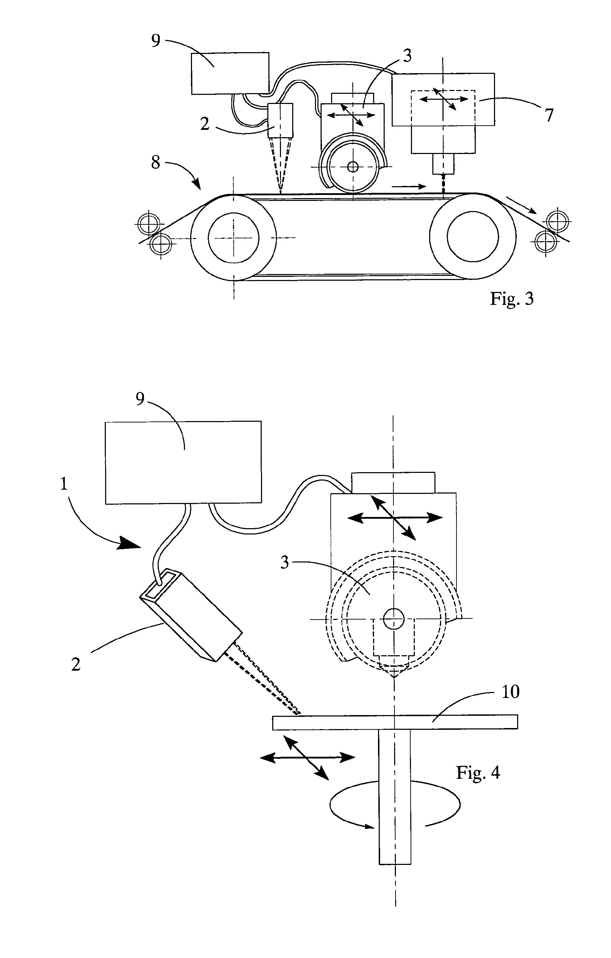

The object 4, 5 to be worked is arranged rotatably on rotating means, for instance a counter-point retaining element or a vice or a disc support 10 as it can be seen in Fig. 4. Then, the object is subjected to a first detecting or reading phase by means of the laser ray or the like coming from the detecting unit 2. During this phase, the ray detects or reads the shape and height of the piece to be worked whille the piece rotates or goes forward. Then, in a second working phase, the diamond tool works the piece or object on the ground of the data detected and transmitted to the processor 9 so that the object may be worked with the utmost precision irrespective of its surface position and height of working point.

On the contrary, in case the piece itself must accomplish any displacements in respect to the detecting or reading unit and incising tools, the piece is arranged between movable, adjustable retaining means which permit an automatic processor-controlled displacement of the piece.

As it can be seen, the so-described machine can execute diamond incisions on any articles, even if they show very irregular shapes or undercuts or very thin thicknesses. In these cases, the set-up incision depth is always maintained.

Advantageously, the detection through laser ray or the like can be done with any object position and even with a displacement of 90 or 180 degrees from the incision point or any other suitable position.

The present diamond machine has been described and represented according to the preferred solution. However, there may be provided variants that are technically equivalent to the described mechanical parts, detecting elements and components and therefore, these variants are to be considered as included in the scope of protection of the present invention.

## Claims

1. Diamond machine (1) for the incision of objects showing different shapes, comprising a detecting device (2) for the detection of the surface position and height of the working point of objects, chainlets or the like to be worked, **characterized in that** reading means are utilized and comprise at least a measuring laser instrument (7) or a measuring ultrasound instrument or a measuring microwave instrument or the like, which instrument is realized as a one-body instrument and detects the object (4, 5) in a condition of direct pointing in which the information detected is converted in corresponding displacements of the diamond tool on the object to be worked, the machine being controlled by a data processing device such as a detecting processor (9) or the like which detects the shape of the object.

2. Diamond machine (1) for the incision of objects showing different shapes according to the foregoing claim, **characterized in that** the detecting unit (2) is carried out preferably but not necessarily as a one-body unit and is mounted on a suitable support which is separated from an incising head (3) or the detecting unit (2) may be placed in the inside of the incising head (3) in which it may be arranged coaxially to the tools.

3. Diamond machine (1) for the incision of objects showing different shapes according to the foregoing claims, **characterized in that** the detecting ray may be emitted in a condition of direct pointing at the surface of the piece (4) to be worked, the piece being fixed to a suitable fixed or movable support such as a counter-point support or a vice support (6) or the like.

4. Diamond machine (1) for the incision of objects showing different shapes according to the foregoing claims, **characterized in that** the data concerning the surface position and the height of the working point of the piece (4) to be worked are sent to a processor (9) or the like and then, the data are sent from this processor to a working head and more precisely, to head tools showing either a horizontal or a vertical axis.
